# FASCICULE DE BREVET EUROPEEN

(11) **EP 2 614 994 B1**
(45) Date de publication et mention de la délivrance du brevet: **13.08.2014**
(21) Numéro de dépôt: 13150488.8
(22) Date de dépôt: 08.01.2013
(51) Int. Cl.: B60N 2/36, B60R 5/04, B60R 13/01

(54) **Support de calage pour tapis de coffre d'un véhicule automobile.**
Keilstütze für ein Kofferraumteppisch eines Personenkraftfahrzeugs
Wedge support for a trunk carpet in a car

(30) Priorité: 10.01.2012 FR 1250265
(43) Date de publication de la demande: 17.07.2013
(73) Titulaire: PEUGEOT CITROËN AUTOMOBILES SA, 78140 Velizy-Villacoublay (FR); GM Global Technology Operations LLC, Detroit, MI 48265-3000 (US)
(72) Inventeur: Senecal, Josselin, 77176 SAVIGNY LE TEMPLE (FR)

(56) Documents cités:
- DE-A1- 19 948 647
- DE-C1- 19 540 821
- US-A1- 2011 303 355

## Description

### Domaine de l'invention

La présente invention concerne un support de calage pour tapis de coffre recouvrant totalement ou partiellement le plancher du compartiment à bagages d'un véhicule automobile.

### Arrière-plan de l'invention

Un tel compartiment à bagages est délimité par un plancher qui comporte un logement apte à recevoir une roue de secours. Le plancher supporte un tapis de coffre permettant de le dissimuler ainsi que la roue de secours lorsque cette dernière est positionnée dans son logement.

Un tel tapis permet de plus, dans une certaine mesure, de participer à l'amélioration de l'isolation acoustique entre le compartiment à bagages et le compartiment pour les passagers.

Généralement, les tapis reposent horizontalement et de manière stable sur le plancher grâce à des cales fixées sur ce plancher à l'aide d'agrafes ou de goujons. Ces agrafes ou goujons coopèrent avec des trous disposés dans le plancher.

Cependant, la multiplication des trous dans le plancher engendre une perte d'étanchéité ainsi qu'une diminution notable de la résistance mécanique, ce qui est préjudiciable au respect des normes de sécurité.

On connait également de la demande FR 2,792,892, un compartiment à bagages dont le tapis comporte une découpe formant couvercle afin que l'on puisse accéder, lors de son ouverture, à la roue de secours. La bordure de ce couvercle présente une entretoise en V fortement compressée qui repose sur le plancher et constitue ainsi une cale de sorte à ce que le tapis de coffre soit maintenu en place et présente ainsi une surface sensiblement plane lorsque le couvercle est fermé.

Malheureusement, le fait d'intégrer une cale directement sur le tapis a pour conséquence de la rendre visible à l'utilisateur lorsque le couvercle de ce tapis est relevé, ce qui nuit à l'impression de qualité ressentie par cet utilisateur.

On connait également de la demande JP 61-179 182 U, un compartiment à bagages délimité par un plancher et comportant un logement pour la roue de secours.

Le plancher supporte un tapis de coffre surélevé par rapport au plancher grâce à la présence d'un support en plastique moulé simplement posé au dessus de la roue de secours et dont la forme est complémentaire de celle la face supérieure de cette roue. Ce support permet ainsi de caler efficacement cette zone du tapis de sorte à ce qu'elle présente une surface sensiblement plane.

Toutefois, ce type de solution ne permet pas forcément d'assurer un calage de l'ensemble du tapis, notamment dans certains types de véhicules où les sièges de la banquette arrière sont inclinables vers l'avant de sorte à prolonger le compartiment à bagages.

Selon la configuration du véhicule, lors de l'inclinaison vers l'avant, l'extrémité inférieure de la face arrière des sièges peut être amenée à venir au contact de l'extrémité avant du tapis puis à le soulever.

En conséquence et afin d'éviter le soulèvement de l'ensemble du tapis, ce dernier présente une zone d'articulation disposée au niveau de la zone où il est forcé de se plier lorsque la banquette arrière est inclinée.

Le tapis présente alors une portion principale prévue pour reposer en permanence sur le plancher et un ou plusieurs volets situés à l'avant du compartiment à bagages aptes à se relever lors de l'inclinaison d'une partie ou de la totalité du dossier de la banquette arrière.

En l'absence de support spécifique de calage dédié à ces volets, ceux-ci ont tendance à s'abaisser légèrement pour venir au contact du plancher, de sorte qu'ils ne se situent plus tout à fait dans le prolongement de la portion principale du tapis ; ce qui est nuisible à l'aspect esthétique du compartiment à bagages et dégrade le niveau de qualité ressentie par l'utilisateur.

On connaît également du document US2011/303355 un support de calage conforme au préambule de la revendication 1.

### Objet et résumé de l'invention

La présente invention vise donc à remédier à ces inconvénients.

Elle propose à cet effet, un support de calage pour tapis de coffre recouvrant totalement ou partiellement le plancher du compartiment à bagages d'un véhicule automobile, conforme à la partie caractérisante de la revendication 1.

Le support selon l'invention permet ainsi de soutenir les volets situés à l'avant du compartiment à bagages de sorte à ce qu'ils demeurent à l'horizontale et dans le prolongement de la portion principale du tapis de coffre lorsque les sièges de la banquette arrière sont en position relevée. Il permet ainsi d'améliorer sensiblement l'aspect esthétique ainsi que le niveau de qualité ressentie par l'utilisateur du véhicule.

D'autre part, et grâce à la coopération de ses moyens de calage avec les aspérités du plancher, ledit support n'exige pas l'utilisation de moyens de fixation tels que des agrafes ou des goujons pour assurer son maintien sur le plancher.

Les bénéfices procurés par l'invention en termes d'aspect esthétique et de qualité ressentie ne sont ainsi pas obtenus au détriment d'une diminution de la sécurité, puisque le plancher ne nécessite aucun perçage supplémentaire ni quelconque autre modification structurelle pouvant altérer sa résistance mécanique.

Selon des caractéristiques préférées de l'invention, prises seules ou en combinaison :
- lesdits moyens de blocage en translation selon l'axe longitudinal dudit support comportent deux renfoncements d'angle situés aux deux extrémités dudit support et aptes à coopérer avec deux bossages dudit plancher ;
- lesdits moyens de blocage en translation selon l'axe longitudinal dudit support comportent deux portions de paroi s'étendant dans un plan transversal à l'axe longitudinal dudit véhicule et dont les tranches sont aptes à coopérer avec le pourtour d'un logement pour roue de secours que comporte ledit plancher ;

- lesdits moyens de blocage en translation selon l'axe longitudinal dudit support comportent plusieurs échancrures aptes à coopérer avec des bossages ovoïdes situés sur la paroi latérale d'un logement pour roue de secours que comporte ledit plancher ;
- lesdits moyens de calage comportent des moyens de blocage en translation selon l'axe transversal dudit support ;
- lesdits moyens de blocage en translation selon l'axe transversal dudit support comportent des échancrures situées à proximité des deux extrémités latérales dudit support et aptes à coopérer avec des bossages dudit plancher ;
- lesdits moyens de blocage en translation selon l'axe transversal dudit support comportent des cloisons orientées transversalement à l'axe longitudinal dudit support et dont les tranches sont aptes à coopérer avec la paroi latérale d'un logement pour roue de secours ;
- ledit support de calage comporte une longrine à partir de laquelle s'étendent une multitude de cloisons transversales ;
- ladite longrine comporte une paroi supérieure, une paroi longitudinale avant située en regard de ladite banquette arrière, et une paroi longitudinale arrière située en regard d'un logement pour roue de secours ; ladite paroi supérieure s'étendant parallèlement audit plancher tandis que les dites parois longitudinales avant et arrière s'étendant transversalement à ladite paroi supérieure en direction dudit plancher ; et/ou
- ladite paroi supérieure comporte une multitude de protubérances globalement parallélépipédiques qui saillent en direction opposée audit plancher et présentent chacune une face externe plane apte à recevoir une portion dudit tapis.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue de dessus et en perspective d'un compartiment à bagages délimité par un plancher comportant un logement pour une roue de secours, et sur lequel repose un support pour tapis selon l'invention ;
- la figure 2 représente une vue de dessous en perspective du support pour tapis de la figure 1 ;
- la figure 3 représente une vue en coupe longitudinale du support de tapis selon l'invention ;
- la figure 4 représente une vue en coupe transversale du support de tapis de la figure 1 selon le plan repéré par la ligne IV-IV sur la figure 3 ;
- la figure 5 représente une vue en coupe transversale du support de tapis de la figure 1 selon le plan repéré par la ligne V-V sur la figure 3 ;
- la figure 6 représente une vue latérale de la zone d'articulation d'un siège de la banquette arrière en position relevée, et dans laquelle certains éléments tels que le plancher ne sont pas représentés afin de faciliter la compréhension ; et
- la figure 7 représente une vue similaire à celle de la figure 6 mais dans laquelle le siège est en position abaissée.

### Description détaillée d'un mode de réalisation

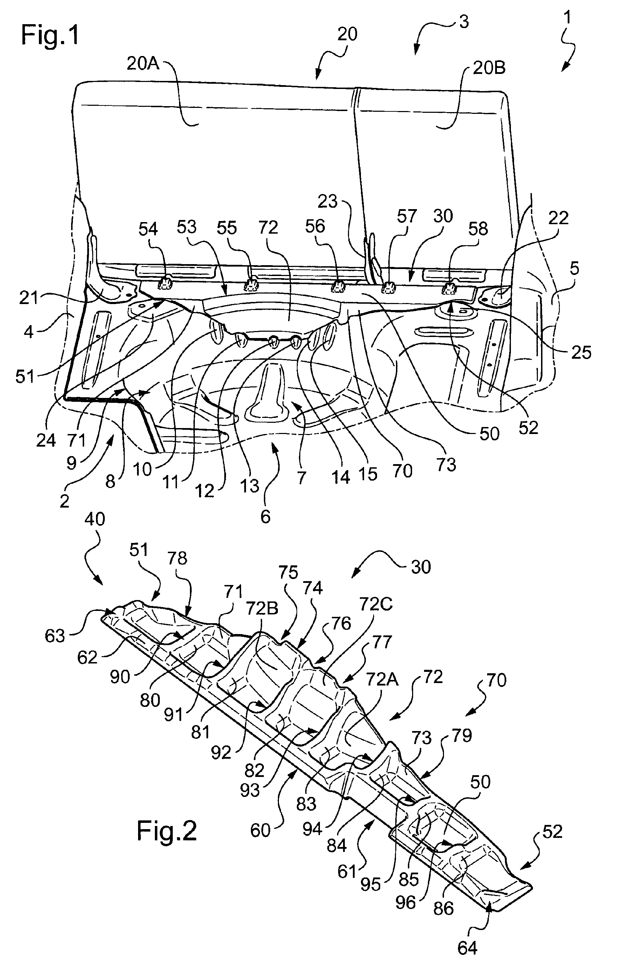

Le compartiment à bagages 1 illustré sur la figure 1 est délimité par un plancher 2 s'étendant selon l'axe longitudinal du véhicule depuis son hayon (non représenté sur les figures) jusqu'à sa banquette arrière 3. Ce plancher 2 qui s'étend transversalement à l'axe du véhicule entre les deux ailes latérales arrière 4, 5 du véhicule, comporte un logement 6 pour une roue de secours. Le plancher 2 réalisé en tôles emboutis, est relié aux deux ailes latérales 4, 5 du véhicule par soudage.

Le logement 6 pour la roue de secours comporte une paroi de fond 7 globalement horizontale et une paroi latérale 8 légèrement tronconique s'évasant en direction de sa bordure supérieure 9.

La portion avant de cette paroi latérale 8 comporte sur sa face interne, six bossages ovoïdes 10, 11, 12, 13, 14, 15 formés par emboutissage et s'étendant en direction de la bordure supérieure 9.

La banquette arrière 3 est ici de type 2/3 - 1/3, c'est-à-dire que son dossier 20 est formé de deux parties distinctes 20A, 20B pouvant se rabattre ou se relever indépendamment l'une de l'autre.

Le pivotement de ces deux parties 20A, 20B de la banquette 20 est assuré grâce à deux supports d'articulations latéraux 21, 22 fixés au plancher 2 respectivement au niveau de ses coins avant gauche et avant droit, et un support d'articulation intermédiaire 23 fixé également au plancher 2 au niveau de la démarcation entre les deux parties 20A, 20B du dossier.

Le plancher 2 qui est globalement plat aux alentours du logement 6 pour la roue de secours, présente néanmoins certaines aspérités.

Notamment, il comprend deux bossages 24, 25 situés respectivement à proximité du support d'articulation latéral gauche 21 et du support d'articulation latéral droit 22.

Comme illustré sur la figure 1, un support de calage 30 repose sur la partie avant du plancher 2 entre la banquette arrière 3 et le logement 6 pour la roue de secours.

On va maintenant décrire ce support de calage 30 plus en détails à l'appui des figures 1 à 5.

Celui-ci s'étend longitudinalement selon une direction parallèle à la banquette arrière 3 entre les supports d'articulation latéraux 21, 22.

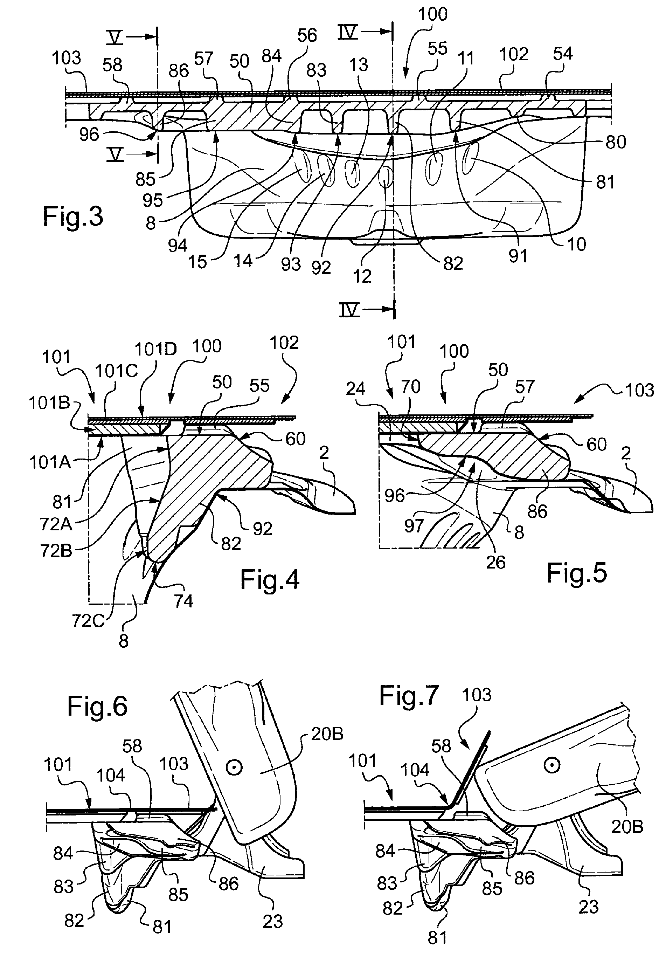

Il comporte une longrine 40 à partir de laquelle s'étendent une multitude de cloisons transversales 80, 81, 82, 83, 84, 85, 86, ici au nombre de sept (figures 2 et 3).

La longrine 40 comporte une paroi supérieure 50 ainsi que deux parois longitudinales avant 60 (située en regard de la banquette arrière 3) et arrière 70 (située en regard du logement 6 pour la roue de secours) qui s'étendent en direction du plancher 2 depuis les bords longitudinaux avant et arrière de la paroi supérieure 50 (figures 1 et 2).

La paroi supérieure 50 s'étend selon un plan parallèle au plancher 2 et présente une forme globalement rectangulaire.

Plus précisément, le bord longitudinal avant est rectiligne sur toute la longueur de la longrine 40 tandis que le bord longitudinal arrière présente plusieurs échancrures 51, 52, 53 (figure 1).

Les échancrures 51, 52 sont situées chacune à proximité d'une extrémité latérale correspondante de la longrine 40 et présentent un profil prévu pour épouser parfaitement les bossages 24, 25 du plancher 2 lorsque le support de calage 30 est en place.

L'échancrure 53 est située le long d'une zone intermédiaire (ici, légèrement décentrée) du bord longitudinal arrière, cette zone se trouvant à l'aplomb de l'extrémité avant du logement 6 pour la roue de secours lorsque le support de calage 30 est positionné. Cette échancrure 53 présente un profil en arc de cercle dont le rayon est sensiblement égal à celui de la bordure supérieure 9 du logement 6 pour la roue de secours.

La paroi supérieure 50 comporte cinq protubérances globalement parallélépipédiques 54, 55, 56, 57, 58 qui saillent en direction opposée au plancher 2 et présentent chacune une face externe plane. Les trois protubérances 54, 55, 56 sont régulièrement espacées les unes des autres et prévues pour longer la base de la partie 20A du dossier 20 lorsque le support de calage 30 est en place (figure 1). De la même manière, les deux protubérances 57, 58 sont prévues pour longer la base de la partie 20B du dossier 20 lorsque le support de calage 30 est en place (figure 1).

La paroi longitudinale avant 60 s'étend vers la banquette arrière 3 et en direction du plancher 2, en suivant un profil légèrement concave (figures 4 et 5) hormis dans une portion intermédiaire où elle forme un renfoncement 61 pour la réception du support d'articulation intermédiaire 23 (figure 2). Sa tranche 62 présente un profil ondulé prévu pour épouser parfaitement les aspérités que présente le plancher 2 au niveau des surfaces de contact avec cette paroi longitudinale avant 60 lorsque le support de calage 30 est en place. En particulier, les extrémités longitudinales de cette tranche 62 sont biseautées se sorte à former deux renfoncements d'angle 63, 64 prévus pour coopérer avec des bossages que comporte le plancher 2 lorsque le support de calage 30 est en place (figure 2).

La paroi longitudinale arrière 70 comporte deux portions latérales 71, 73 situées de part et d'autre d'une portion intermédiaire 72 située à l'aplomb de l'échancrure 53 en arc de cercle (figures 1 et 2).

La portion intermédiaire 72 comporte un tronçon proximal 72A, un tronçon distal 72C et un tronçon médian 72B disposé entre les deux (figures 2 et 4). Le tronçon proximal 72A présente une hauteur constante et s'étend transversalement à la paroi supérieure 50 le long de l'échancrure en arc de cercle 53, formant ainsi un secteur angulaire d'un cylindre (figures 1 et 4). Le tronçon médian 72B qui s'étend dans le prolongement du tronçon proximal 72A présente une forme tronconique, sa face interne étant prévue pour regarder la face externe de la paroi latérale 8 du logement 6 pour la roue de secours lorsque le support de calage 30 est en place (figures 1 et 4). Le tronçon distal 72C s'étend dans le prolongement du tronçon médian 72B et quasi parallèlement au tronçon proximal 72A (figures 1 et 4). Sa tranche 74 comprend trois échancrures 75, 76, 77 dont les profils sont prévus pour épouser parfaitement la forme des trois bossages ovoïdes 11, 12, 13 de la paroi latérale 8 du logement 6 pour la roue de secours (figure 2) lorsque le support de calage 30 est en place.

Les deux portions latérales 71, 73 s'étendent transversalement à la paroi supérieure 50 (dans un plan transversal à l'axe longitudinal dudit véhicule) et en direction du plancher 2. Leur hauteur augmente progressivement depuis les échancrures 53, 54 jusqu'à la portion intermédiaire 72 où elles atteignent la hauteur du tronçon proximal 72A (figure 1). Les tranches 78, 79 de ces deux portions latérales 71, 73 présentent un profil ondulé prévu pour épouser parfaitement les aspérités que présente le plancher 2 au niveau des surfaces de contact avec ces deux portions latérales 71, 73 lorsque le support de calage 30 est en place.

Les sept cloisons 80, 81, 82, 83, 84, 85, 86 s'étendent transversalement à la paroi supérieure 50 et de part et d'autre des parois longitudinales avant 60 et arrière 70 (figures 2 et 3). Elles sont régulièrement espacées le long de la longrine 40.

Leurs tranches 90, 91, 92, 93, 94, 95, 96 présentent un profil prévu pour correspondre à celui du plancher 2 au niveau des surfaces de contact avec ces sept cloisons 80, 81, 82, 83, 84, 85, 86, lorsque le support de calage 30 est en place (figure 3).

En particulier, les tranches 91, 92, 93 des cloisons 81, 82, 83 s'étendant au niveau de la portion intermédiaire 72 de la paroi longitudinale arrière 70, viennent épouser parfaitement la surface de la paroi latérale 8 du logement 6 pour la roue de secours (figure 4).

Il est également à noter que la tranche 96 de la cloison 86 s'étendant à proximité de l'échancrure 52 (que présente la portion latérale 73 de la paroi longitudinale arrière 70), présente une échancrure 97 (figure 5) dont le profil est prévu pour épouser parfaitement la forme d'un bossage 26 que comporte le plancher 2 au niveau de la surface de contact avec la cloison 86 lorsque le support de calage 30 est en place.

Le support de calage 30 est obtenu de préférence par moulage de polystyrène expansé (PSE), matériau présentant les avantages d'être léger, peu couteux, et d'avoir une bonne résistance à la compression.

On va maintenant décrire rapidement les opérations de mise en place du support de calage 30 sur le plancher 2.

Tout d'abord, l'opérateur dispose ce support de calage 30 au dessus de la partie avant du plancher 2, de sorte à ce que la portion intermédiaire 72 de sa paroi longitudinale arrière 70 se trouve à l'aplomb de l'échancrure 53 en arc de cercle.

Il lui suffit ensuite de faire glisser les tranches 91, 92, 93 des cloisons 81, 82, 83 contre la paroi latérale 8 du logement 6, en direction de la paroi de fond 7 et de sorte à ce que les trois échancrures 75, 76, 77 coulissent le long des trois bossages ovoïdes 11, 12, 13.

L'opérateur n'a alors qu'à poursuivre le mouvement jusqu'à ce que les tranches des parois longitudinales avant 60 et arrière 70 de la longrine 40 viennent reposer contre l'avant du plancher 2 (figure 1).

Le support de calage 30 est alors en place et ne peut plus se déplacer en translation selon son axe longitudinal (i.e. le long du dossier 20 de la banquette arrière 3) :
- du fait de la coopération des deux renfoncements d'angle 63, 64 situés aux deux extrémités de la paroi longitudinale avant 60 avec deux bossages (non visibles sur les figures) du plancher 2 (la butée du premier bossage contre le renfoncement 63 empêchant tout déplacement vers l'aile latérale 4 tandis que la butée du deuxième bossage contre le renfoncement 64 bloque tout mouvement vers l'aile latérale 5) ;
- mais également du fait de la coopération des tranches 78, 79 des deux portions latérales 71, 73 de la paroi longitudinale arrière 70 avec le pourtour convexe du logement 6 pour la roue de secours la tranche (la butée de la tranche 78 contre le pourtour du logement 6 empêchant tout déplacement vers l'aile latérale 4 tandis que la butée de la tranche 79 contre ce même pourtour bloque tout mouvement vers l'aile latérale 5) ;
- et enfin du fait de la coopération des trois échancrures 75, 76, 77 de la tranche 74 de la portion intermédiaire 72 de la paroi longitudinale arrière 70 avec les trois bossages ovoïdes 11, 12, 13 de la paroi latérale 8 du logement 6 pour la roue de secours (figure 1).

D'autre part, le support de calage 30 ne peut se déplacer en translation selon son axe transversal (i.e. d'avant en arrière du compartiment , à bagages) du fait de la coopération des échancrures 51, 52, 97 situées à proximité des deux extrémités latérales de ce support 30 avec les bossages 24, 25, 26 du plancher 2 empêchant tout déplacement vers l'arrière ; ainsi que de la coopération des tranches 91, 92, 93 des cloisons 81, 82, 83 avec la surface de la paroi latérale 8 du logement 6 pour la roue de secours qui bloque tout mouvement vers l'avant.

Une fois le support de calage 30 mis en place, l'opérateur peut alors positionner le tapis 100.

Ce tapis 100 comporte une portion principale 101 prévue pour reposer en permanence sur le plancher 2 et deux volets 102, 103 de type 2/3 - 1/3 disposés côte à côte dans le prolongement de la portion principale 101 et articulés à cette dernière au niveau d'une zone charnière 104.

La portion principale 101 est ici formée de quatre couches superposées de matériaux : une première couche inférieure 101A en textile non tissé prévue pour être en contact avec le plancher 2, une deuxième couche 101B formée d'un feutre insonorisant, une troisième couche 101C en panneau composite de fibres de bois à densité moyenne (MDF), et une quatrième couche supérieure 101D en moquette.

Les deux volets 102, 103 sont constitués de la même manière, sauf qu'ils ne comportent pas la couche en feutre insonorisant et présentent donc une épaisseur moindre que celle de la portion principale 101. Le volet 102 s'étend sur les 2/3 de la largeur du dossier 20 le long de sa partie 20A, tandis que le volet 103 s'étend sur le 1/3 restant de la largeur du dossier 20 le long de sa partie 20B.

La zone charnière 104 est quand à elle composée uniquement des deux couches de textile non tissé et de moquette, ce qui lui permet de présenter une certaine souplesse nécessaire pour assurer le pivotement des deux volets 102, 103 par rapport à la portion principale.

Après l'installation du tapis 100 dans le compartiment à bagages, l'extrémité avant de sa partie principale 101 repose sur la portion arrière de la paroi supérieure 50 du support de calage. D'autre part, le volet 102 repose sur les trois protubérances 54, 55, 56, tandis que le volet 103 repose sur les deux protubérances 57, 58 30 (figures 4, 5 et 6).

La masse de chacun des volets 102, 103 exerce alors un effort sur le support de calage 30, orienté en direction du plancher et qui participe également au maintien en position de ce support 30.

Sur ces figures où les deux parties 20A, 20B du dossier 20 sont en position relevée, on constate que ces protubérances du support de calage 30 permettent aux deux volets 102, 103 d'être parfaitement positionnés à l'horizontale et dans l'alignement de la portion principale du tapis 101, ce qui améliore sensiblement l'aspect esthétique du compartiment à bagages et le niveau de qualité ressenti par l'utilisateur du véhicule.

Lorsque l'utilisateur souhaite agrandir le compartiment du coffre en abaissant la partie 20A, 20B du dossier 20, la base de cette partie 20A, 20B vient soulever le volet correspondant 102, 103 (figure 7).

Dès que l'utilisateur redresse la partie du dossier 20A, 20B, la gravité s'exerçant sur ce volet 102, 103 le ramène instantanément dans sa position initiale (figure 6).

Selon une variante non représentée, le support de calage présente une forme différente prévue pour s'adapter à la configuration du plancher. Ainsi, dans le cas où ce plancher ne comporte pas de logement pour une roue de secours, les moyens de calage coopèrent avec d'autres aspérités.

Bien entendu, la présente invention ne se limite pas aux formes de réalisation décrites et représentées, mais elle englobe toute variante d'exécution.

## Revendications

1. Support de calage pour tapis de coffre (100) recouvrant totalement ou partiellement le plancher (2) du compartiment à bagages (1) d'un véhicule automobile, étant situé à l'avant dudit compartiment (1) à proximité de la banquette arrière (3) dudit véhicule et s'étend parallèlement à ladite banquette (3), et comportant des moyens de calage apte à coopérer avec ledit plancher (2) pour maintenir ledit support dans une position prédéterminée **caractérisé en ce que** lesdits moyens de calage comportent des moyens de blocage en translation selon l'axe longitudinal dudit support (63, 64, 71, 73, 75, 76, 77).

2. Support de calage selon la revendication 1, **caractérisé en ce que** lesdits moyens de blocage en translation selon l'axe longitudinal dudit support comportent deux renfoncements d'angle (63, 64) situés aux deux extrémités dudit support et aptes à coopérer avec deux bossages dudit plancher (2).

3. Support de calage selon l'une des revendications 1 ou 2, **caractérisé en ce que** lesdits moyens de blocage en translation selon l'axe longitudinal dudit support comportent deux portions de paroi (71, 73) s'étendant dans un plan transversal à l'axe longitudinal dudit véhicule et dont les tranches (78, 79) sont aptes à coopérer avec le pourtour d'un logement (6) pour roue de secours que comporte ledit plancher (2).

4. Support de calage selon l'une des revendications 1 à 3, **caractérisé en ce que** lesdits moyens de blocage en translation selon l'axe longitudinal dudit support comportent plusieurs échancrures (75, 76, 77) aptes à coopérer avec des bossages ovoïdes (11, 12, 13) situés sur la paroi latérale (8) d'un logement (6) pour roue de secours que comporte ledit plancher (2).

5. Support de calage selon l'une des revendications 1 à 4, **caractérisé en ce que** lesdits moyens de calage comportent des moyens de blocage en translation selon l'axe transversal dudit support (51, 52, 97, 81, 82, 83).

6. Support de calage selon la revendication 5, **caractérisé en ce que** lesdits moyens de blocage en translation selon l'axe transversal dudit support comportent des échancrures (51, 52, 97) situées à proximité des deux extrémités latérales dudit support et aptes à coopérer avec des bossages (24, 25, 26) dudit plancher (2).

7. Support de calage selon l'une des revendications 5 ou 6, **caractérisé en ce que** lesdits moyens de blocage en translation selon l'axe transversal dudit support comportent des cloisons (81, 82, 83) orientées transversalement à l'axe longitudinal dudit support et dont les tranches (91, 92, 93) sont aptes à coopérer avec la paroi latérale (8) d'un logement (6) pour roue de secours.

8. Support de calage selon l'une des revendications 1 à 7, **caractérisé en ce qu'il** comporte une longrine (40) à partir de laquelle s'étendent une multitude de cloisons transversales (80, 81, 82, 83, 84, 85, 86).

9. Support de calage selon la revendication 8, **caractérisé en ce que** ladite longrine (40) comporte une paroi supérieure (50), une paroi longitudinale avant (60) située en regard de ladite banquette arrière (3), et une paroi longitudinale arrière (70) située en regard d'un logement (6) pour roue de secours ; ladite paroi supérieure (50) s'étendant parallèlement audit plancher (2) tandis que les dites parois longitudinales avant (60) et arrière (70) s'étendant transversalement à ladite paroi supérieure (50) en direction dudit plancher (2).

10. Support de calage selon la revendication 9, **caractérisé en ce que** ladite paroi supérieure (50) comporte une multitude de protubérances globalement parallélépipédiques (54, 55, 56, 57, 58) qui saillent en direction opposée audit plancher (2) et présentent chacune une face externe plane apte à recevoir une portion (102, 103) dudit tapis (100).

## Patentansprüche

1. Verkeilungsauflage für eine Kofferraummatte (100), die den Boden (2) des Gepäckfaches (1) eines Kraftfahrzeugs vollständig oder teilweise abdeckt, wobei sie sich im Vorderbereich des Faches (1) in der Nähe der Rückbank (3) des Fahrzeugs befindet und sich parallel zur Rückbank (3) erstreckt und Verkeilungsmittel umfasst, die imstande sind, mit dem Boden (2) zusammenzuwirken, um die Auflage in einer vorausbestimmten Position zu halten, **dadurch gekennzeichnet, dass** die Verkeilungsmittel Schiebesperrmittel gemäß der Längsachse der Auflage (63, 64, 71, 73, 75, 76, 77) umfassen.

2. Verkeilungsauflage nach Anspruch 1, **dadurch gekennzeichnet, dass** die Schiebesperrmittel gemäß der Längsachse der Auflage zwei Eckvertiefungen (63, 64) umfassen, die sich an den zwei Enden der Auflage befinden und imstande sind, mit zwei Erhebungen des Bodens (2) zusammenzuwirken.

3. Verkeilungsauflage nach einem der Ansprüche 1 oder 2, **dadurch gekennzeichnet, dass** die Schiebesperrmittel gemäß der Längsachse der Auflage zwei Wandabschnitte (71, 73) umfassen, die sich in einer Ebene erstrecken, die quer zur Längsachse des Fahrzeugs verläuft, und deren Ränder (78, 79) imstande sind, mit der Außenlinie einer Aufnahme (6) für das Reserverad, das im Boden (2) enthalten ist, zusammenzuwirken.

4. Verkeilungsauflage nach einem der Ansprüche 1 bis 3, **dadurch gekennzeichnet, dass** die Schiebesperrmittel gemäß der Längsachse der Auflage mehrere Aussparungen (75, 76, 77) umfassen, die imstande sind, mit eiförmigen Erhebungen (11, 12, 13) zusammenzuwirken, die sich auf der Seitenwand (8) einer Aufnahme (6) für das Reserverad, das im Boden (2) enthalten ist, befinden.

5. Verkeilungsauflage nach einem der Ansprüche 1 bis 4, **dadurch gekennzeichnet, dass** die Verkeilungsmittel Schiebesperrmittel gemäß der Querachse der Auflage (51, 52, 97, 81, 82, 83) umfassen.

6. Verkeilungsauflage nach Anspruch 5, **dadurch gekennzeichnet, dass** die Schiebesperrmittel gemäß der Querachse der Auflage Aussparungen (51, 52, 97) umfassen, die sich in der Nähe der zwei seitlichen Enden der Auflage befinden und imstande sind, mit Erhebungen (24, 25, 26) des Bodens (2) zusammenzuwirken.

7. Verkeilungsauflage nach einem der Ansprüche 5 oder 6, **dadurch gekennzeichnet, dass** die Schiebesperrmittel gemäß der Querachse der Auflage Trennwände (81, 82, 83) umfassen, die querverlaufend zur Längsachse der Auflage ausgerichtet sind und deren Ränder (91, 92, 93) imstande sind, mit der Seitenwand (8) einer Aufnahme (6) für ein Reserverad zusammenzuwirken.

8. Verkeilungsauflage nach einem der Ansprüche 1 bis 7, **dadurch gekennzeichnet, dass** sie eine Längsschwelle (40) umfasst, vor der aus sich mehrere Trennwände (80, 81, 82, 83, 84, 85, 86) erstrecken.

9. Verkeilungsauflage nach Anspruch 8, **dadurch gekennzeichnet, dass** die Längsschwelle (40) eine obere Wand (50), eine vordere Längswand (60), die sich gegenüber der Rückbank (3) befindet, und eine hintere Längswand (70) umfasst, die sich gegenüber einer Aufnahme (6) für ein Reserverad befindet, wobei sich die obere Wand (50) parallel zum Boden (2) erstreckt, während sich die vordere (60) und hintere (70) Längswand quer zur oberen Wand (50) in Richtung Boden (2) erstrecken.

10. Verkeilungsauflage nach Anspruch 9, **dadurch gekennzeichnet, dass** die obere Wand (50) mehrere im Wesentlichen quaderförmige Vorsprünge (54, 55, 56, 57, 58) umfasst, die in eine dem Boden (2) entgegengesetzte Richtung vorspringen und jeweils eine plane Außenseite aufweisen, die imstande ist, einen Abschnitt (102, 103) der Matte (100) aufzunehmen.

## Claims

1. A wedge support for a trunk carpet (100) covering all or part of the floor (2) of the luggage compartment (1) of a motor vehicle, being located at the front of said compartment (1) near to the rear seat (3) of said vehicle and extending parallel to said seat (3), and comprising wedging means capable of cooperating with said floor (2) to maintain said support in a predetermined position, **characterised in that** said wedging means comprise blocking means for blocking the unit in translation along the longitudinal axis of said support (63, 64, 71, 73, 75, 76, 77).

2. A wedge support according to claim 1, **characterised in that** said blocking means blocking the unit in translation along the longitudinal axis of said support comprise two corner reinforcements (63, 64) positioned at the two ends of said support and capable of cooperating with two bosses of said floor (2).

3. A wedge support according to one of claims 1 or 2, **characterised in that** said blocking means blocking the unit in translation along the longitudinal axis of said support comprise two wall portions (71, 73) extending along a plane transverse to the longitudinal axis of said vehicle and whose edges (78, 79) are capable of cooperating with the perimeter of a housing (6) for a spare wheel comprised by said floor (2).

4. A wedge support according to one of claims 1 to 3, **characterised in that** said blocking means blocking the unit in translation along the longitudinal axis of said support comprise multiple notches (75, 76, 77) capable of cooperating with two ovoid bosses (11, 12, 13) positioned on the lateral wall (8) of a housing (6) for a spare wheel comprised by said floor (2).

5. A wedge support according to one of claims 1 to 4, **characterised in that** said wedging means comprise blocking means for blocking the unit in translation along the transverse axis of said support (51, 52, 97, 81, 82, 83).

6. A wedge support according to claim 5, **characterised in that** said blocking means blocking the unit in translation along the transverse axis of said support comprise notches (51, 52, 97) positioned near to the two lateral ends of said support and capable of cooperating with the bosses (24, 25, 26) of said floor (2).

7. A wedge support according to one of claims 5 or 6, **characterised in that** said blocking means blocking the unit in translation along the transverse axis of said support comprise partition walls (81, 82, 83) oriented transversal to the longitudinal axis of said support and whose edges (91, 92, 93) are capable of cooperating with the lateral wall (8) of a housing (6) for a spare wheel.

8. A wedge support according to one of claims 1 to 7, **characterised in that** it comprises a stringer (40) from which extend a multitude of transverse partition walls (80, 81, 82, 83, 84, 85, 86).

9. A wedge support according to claim 8, **characterised in that** said stringer (40) comprises an upper wall (50), a front longitudinal wall (60) located opposite said rear seat (3) and a rear longitudinal wall (70) located opposite a housing (6) for a spare wheel; said upper wall (50) extending parallel to said floor (2) whereas said front longitudinal wall (60) and rear longitudinal wall (70) extend transversely to said upper wall (50) towards said floor (2).

10. A wedge support according to claim 9, **characterised in that** said upper wall (50) comprises a multitude of protrusions, generally parallelepiped in shape (54, 55, 56, 57, 58) which protrude in a direction opposite to said floor (2) and which each have a flat outer surface capable of accommodating a portion (102, 103) of said carpet (100).
